# EUROPÄISCHE PATENTSCHRIFT

(11) **EP 1 645 333 B1**
(45) Veröffentlichungstag und Bekanntmachung des Hinweises auf die Patenterteilung: **13.08.2008**
(21) Anmeldenummer: 05021297.6
(22) Anmeldetag: 29.09.2005
(51) Int. Cl.: B02C 1/10, B02C 2/00, B02C 4/30, C01B 33/02

(54) **Vorrichtung und Verfahren zum kontaminationsarmen, automatischen Brechen von Siliciumbruch**
Device and method for low-contaminating, automatic breaking of silicon fragments
Dispositif et procédé pour casser, avec faible contamination, des fragments de silicium

(30) Priorität: 07.10.2004 DE 102004048948
(43) Veröffentlichungstag der Anmeldung: 12.04.2006
(73) Patentinhaber: Wacker Chemie AG, 81737 München (DE)
(72) Erfinder: Hesse, Karl, Dr., 84489 Burghausen (DE); Schreieder, Franz, 84367 Tann (DE)
(74) Vertreter: Potten, Holger

(56) Entgegenhaltungen:
- DD-A1- 241 557
- DE-A1- 4 316 626
- GB-A- 2 025 260
- PATENT ABSTRACTS OF JAPAN Bd. 006, Nr. 143 (C-117), 3. August 1982 (1982-08-03) -& JP 57 067019 A (SHIN ETSU HANDOTAI CO LTD), 23. April 1982 (1982-04-23) -& DATABASE WPI Section Ch, Week 198222 Derwent Publications Ltd., London, GB; Class E36, AN 1982-44613E XP002354293
- PATENT ABSTRACTS OF JAPAN Bd. 007, Nr. 263 (C-196), 24. November 1983 (1983-11-24) & JP 58 145611 A (SHINETSU KAGAKU KOGYO KK), 30. August 1983 (1983-08-30)
- PATENT ABSTRACTS OF JAPAN Bd. 014, Nr. 403 (C-0753), 31. August 1990 (1990-08-31) & JP 02 152554 A (KOUJIYUNDO SILICON KK), 12. Juni 1990 (1990-06-12)
- HANS KELLERWESSEL: "Auifbereitung disperser Baustoffe" 1991, VDI VERLAG , DÜSSELDORF , XP002354256 * Seite 33 - Seite 37, Absatz 2 *

## Beschreibung

Die Erfindung betrifft ein Verfahren zum kontaminationsarmen, automatischen Brechen von Siliciumbruch.

Polykristallines Silicium (auch bezeichnet als Polysilicium) ist das Ausgangsprodukt zur Herstellung von kristallinem Silicium für die Elektronik- und Solarindustrie. Die meisten Halbleiterbauelemente und Solarzellen werden aus kristallinem Silicium hergestellt. Zur Herstellung von kristallinem Silicium werden verschiedene Kristallisationsverfahren angewandt, in denen üblicherweise Polysilicium aufgeschmolzen und dann anschließend durch gezielte Erstarrung in monokristallines oder multikristallines Silicium umgewandelt wird. Monokristallines Material wird z.B. durch den Czochralski- (CZ-) Prozess hergestellt, multikristallines Material durch Aufschmelzen und gerichtete Erstarrung im Tiegel oder durch Ziehen von Folien oder Gießen von Bändern. Monokristallines Silicium ist das Ausgangsmaterial für Halbleiterbauelemente und Solarzellen. Multikristallines Silicium dient überwiegend als Ausgangsmaterial für Solarzellen.
Polysilicium wird üblicherweise hergestellt durch Gasphasenabscheidung in einem Reaktor. Dabei werden üblicherweise hochreines Silan oder Chlorsilan auf einem heißen Substrat (bevorzugt aus Silicium) abgeschieden, so dass massive Stäbe, Blöcke oder Bretter erhalten werden. Bevor man dieses Polysilicium in Kristallisationsverfahren verwenden kann, muss man es zerkleinern. Dabei wird es üblicherweise so durch Abrieb kontaminiert, dass man durch Reinigungsverfahren die Verunreinigungen auf der Oberfläche entfernen muss.

In den Kristallisationsverfahren direkt (d.h. ohne Nachreinigung) verwendbares halbleiter- oder solartaugliches d.h. sehr reines (metallische Gesamtkontamination typischerweise < 10 ppba) Polysilicium kann bislang nur durch Handzerkleinerung gewonnen werden. Die Erzeugung von sehr kleinem Bruch ist dadurch zu wenig produktiv, damit unwirtschaftlich und darüber hinaus gesundheitsbelastend. Bekannte automatische Brechverfahren, die geeignet sind, kleine Bruchgrößen zu erzeugen, verursachen entweder eine zu hohe Oberflächenkontamination (z.B. übliche Backenbrecher, Walzenbrecher etc.), was eine aufwendige Nachreinigung erfordert oder sind unwirtschaftlich durch sehr aufwendige Maschinenausführung bzw. aufwendiges Verfahren (z.B. US 5,464,159 (Schockwellenzerkleinerung) oder US 6,024,306 (Zerkleinern durch Stromstoß) oder US 4,871,117 (thermisches Vorbrechen; mechanische Nachzerkleinerung) oder EP 1 338 682 A2). Ein Verfahren zur Erzeugung von Siliciumfeinbruch mittels Brechnalzen, welche mit Silicium beschichtet sind, mit nachfolgender Klassifizierung, ist aus JP 57 067 019 bekannt,

Aufgabe der Erfindung ist die Bereitstellung eines automatischen Verfahrens mit hoher Produktivität, welches Siliciumfeinbruch aus solar- oder halbleitertauglichem Siliciumbruch erzeugt, der direkt, d.h. ohne Nachreinigung, als Rohstoff für die Photovoltaik eingesetzt werden kann oder der direkt als Rohstoff für Halbleiteranwendungen eingesetzt werden kann oder der als Impfpartikel für die Herstellung von granularem Silicium in einer Wirbelschichtabscheidung eingesetzt werden kann.

Diese Aufgabe wird gelöst durch ein Verfahren, bei welchem entsprechender Siliciumbruch auf einen Brecher mit einem Zerkleinerungsverhältnis ε von 1,5 bis 3 umfassend mehrere Brechwerkzeuge mit einer Oberfläche aus einem Hartmetall, bevorzugt Wolframcarbid in einer Kobaltmatrix, besonders bevorzugt mit einem Anteil an Wolframcarbid > 80 Gew.%., gegeben wird und ein Brechgut erzeugt wird, welches in Fraktionen klassiert wird, wobei ein Teil des Brechgutes mit einer Kantenlänge, die kleiner oder gleich ist der maximalen Kantenlänge des erwünschten Siliciumfeinbruchs (Fraktion 1), in einem Auffangbehälter 1 gesammelt wird und der Teil des Brechgutes mit einer Kantenlänge, die größer ist als die Kantenlänge des erwünschten Siliciumfeinbruchs (Fraktion 2), ebenfalls gesammelt wird.

Bei dem Brecher handelt es sich vorzugsweise um einen Walzenbrecher, einen Backenbrecher oder einen Kegel-Besonders bevorzugt um einen Walzenbrecher oder einen Backenbrecher.

In einer Ausführungsform der Erfindung handelt es sich um einen Backenbrecher umfassend mehrere Brechwerkzeuge, die in einem Brechwinkel zueinander angeordnet sind, dadurch gekennzeichnet, dass der Brechwinkel kleiner 14° ist. Vorzugsweise ist der Brechwinkel kleiner 12°, besonders bevorzugt 10° bis 12°.

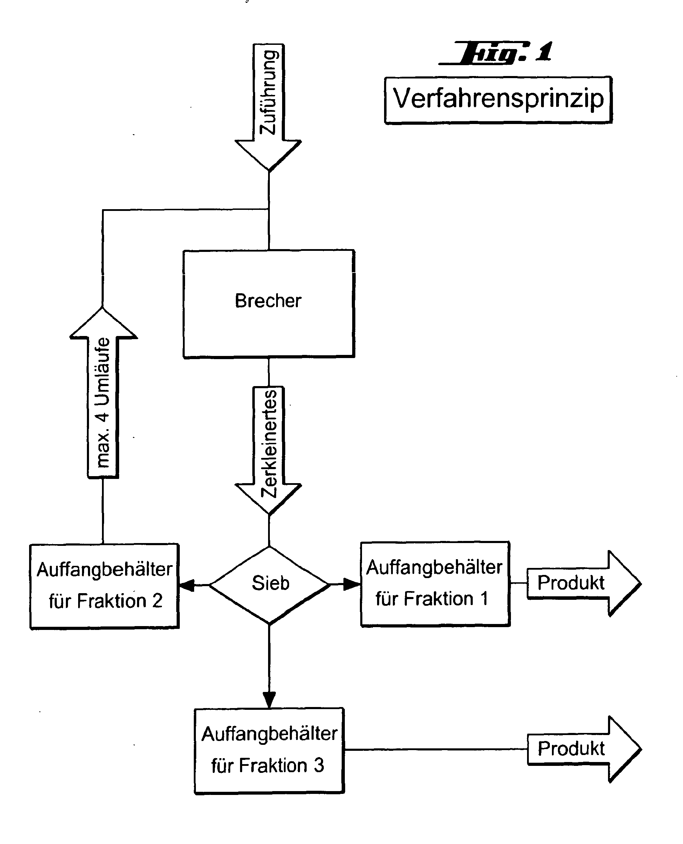

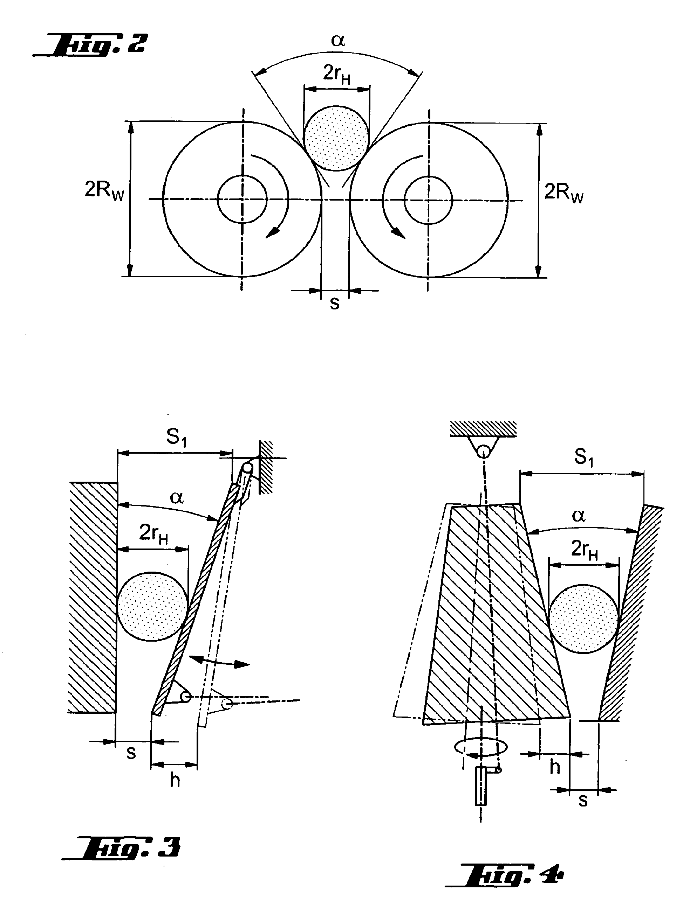

Üblicherweise wird für Backenbrecher in der Fachliteratur (Höffl S.51) ein Brechwinkel von 16° bis 22° bei Grobgut und 14° bis 20° bei Feingut angegeben. Unter dem "Brechwinkel" oder "Einzugswinkel" ist im Sinne der vorliegenden Erfindung der Winkel zwischen den Tangenten an den Brechwerkzeugen im Berührpunkt des Zerkleinerungsgutes zu Beginn des Brechvorganges zu verstehen (Fig. 1). Der Begriff "Brechwinkel" ist für Backenbrecher gebräuchlicher. Für Walzenbrecher analog gebräuchlich ist der Begriff "Einzugswinkel".

Im Falle eines Backenbrechers haben die Backen bevorzugt eine Backenlänge von 45 cm und eine Maulweite von 160 mm, besonders bevorzugt eine Maulweite von 125 mm.

In einer weiteren Ausführungsform der Erfindung handelt es sich um einen Walzenbrecher umfassend mehrere Brechwerkzeuge die in einem Brechwinkel zueinander angeordnet sind, dadurch gekennzeichnet, dass der Brechwinkel kleiner 25° und besonders bevorzugt kleiner 20° ist. Bevorzugt handelt es sich um einen Glattwalzenbrecher oder einen Profilwalzenbrecher (z.B. Stachel- oder Riffel-walzenbrecher).

Im Stand der Technik sind für Glattwalzenbrecher Einzugswinkel von 30° bis 39° für hartes Gut genannt, für weiches Gut bis zu 50 °. (Höffl Seite 97 bis 98)

Im Falle eines Walzenbrechers für großes Aufgabegut bis 10 cm Kantenlänge haben die Walzen bevorzugt einen Durchmesser von 60 cm bis 100 cm. Besonders bevorzugt von 80 cm bis 100 cm. Für kleines Aufgabegut von ca. 1,5 mm Kantenlänge haben die Walzen bevorzugt einen Durchmesser von 30 cm. In einer besonders bevorzugten Ausführungsform des Walzenbrechers beträgt der Einzugswinkel weniger als 20° und die Brechwalzen bestehen aus einkristallinem Silicium mit 30 cm Durchmesser

In einer weiteren Ausführungsform der Erfindung handelt es sich um einen Kegelbrecher, dessen Brechwerkzeuge in einem Brechwinkel α zueinander angeordnet sind, wobei der Brechwinkel α kleiner 12°, bevorzugt 10° bis 12°, ist.

Vorzugsweise wird das Brechgut in 2 Fraktionen klassiert. Das Klassieren erfolgt vorzugsweise mittels eines Siebes. Aus Fraktion 1 wird vorzugsweise der Teil des Feinbruchs, der eine Kantenlänge besitzt, die kleiner ist, als die minimale Länge des erwünschten Siliciumfeinbruchs, aussortiert und getrennt gesammelt (Fraktion 3). Das Aussortieren erfolgt vorzugsweise wiederum mittels eines Siebes geeigneter Maschenweite.

Vorzugsweise wird der Teil des Brechgutes mit einer Kantenlänge, die größer ist als die Kantenlänge des erwünschten Siliciumfeinbruchs, nochmals auf einen Brecher mit einem Zerkleinerungsverhältnis von 1,5 bis 3 für dieses Aufgabegut aufgegeben, zerkleinert, analog klassiert und gesammelt.
Besonders bevorzugt wird der Teil des Brechgutes mit einer Kantenlänge, die größer ist als die Kantenlänge des erwünschten Siliciumfeinbruchs, abermals auf einen Brecher mit einem Zerkleinerungsverhältnis von 1,5 bis 3 für dieses Aufgabegut aufgegeben, zerkleinert, analog klassiert und gesammelt.

Nach viermaligem Brecherdurchlauf in der beschriebenen Art und Weise, ist in der Regel kein Siliciumbruch mit einer Kantenlänge, die größer ist als die Kantenlänge des erwünschten Siliciumfeinbruchs, mehr vorhanden. Fig. 1 stellt das Prinzip des erfindungsgemäßen Verfahrens dar.

Um den Kontaminationsgrad nicht unnötig zu erhöhen, werden im erfindungsgemäßen Verfahren vorzugsweise maximal vier Brecherdurchläufe durchgeführt.

In einer weiteren Ausführungsform der Erfindung wird das gebrochene Gut in 3 Fraktionen klassiert, wobei ein Teil des Brechgutes mit einer Kantenlänge im Bereich des erwünschten Siliciumfeinbruchs (Fraktion 1) in einem Auffangbehälter 1 gesammelt wird, der Teil des Brechgutes mit einer Kantenlänge kleiner als der erwünschte Siliciumfeinbruch (Fraktion 3), in einem Auffangbehälter 3 gesammelt wird und der Teil des Brechgutes mit einer Kantenlänge größer als die Kantenlänge des erwünschten Siliciumfeinbruchs (Fraktion 2) nochmals auf einen erfindungsgemäßen Brecher mit einem Zerkleinerungsverhältnis von 1,5 bis 3 für dieses Aufgabegut aufgegeben wird, der Teil des Brechgutes mit einer Kantenlänge, die größer ist als die Kantenlänge des erwünschten Siliciumfeinbruchs nochmals auf einen erfindungsgemäßen Brecher mit einem Zerkleinerungsverhältnis von 1,5 bis 3 für dieses Aufgabegut gegeben wird

Das Verfahren kann dabei derart geführt werden, dass immer der gleiche Brecher verwendet wird, wobei nach jedem Durchlauf das Zerkleinerungsverhältnis des Brechers auf die Korngröße des jeweiligen Aufgabegutes eingestellt wird. Es kann aber auch mit bis zu vier Brechern nacheinander durchgeführt werden.

Die nach jedem Brecherdurchlauf erhaltenen Fraktionen 1 bzw. 3 werden vorzugsweise jeweils vereint und direkt, d.h. ohne weitere Aufreinigung, verpackt. Der so erhaltene erwünschte Siliciumfeinbruch (Fraktion 1) sowie der Feinbruch einer höheren Feinheit (Fraktion 3) sind ohne weitere Aufreinigung als halbleiter- und solartauglicher Siliciumfeinbruch geeignet.

Überraschenderweise wurde gefunden, dass sich die Fraktion mit der höheren Feinheit (Fraktion 3) hervorragend zum Einsatz als Impfpartikel zur Abscheidung von polykristallinem Silicium in einem Wirbelschichtverfahren (wie z.B. beschrieben in dem Patent DE 19948395 A1) eignet. Damit ermöglicht das erfindungsgemäße Verfahren eine deutlich wirtschaftlichere Erzeugung von granularem Polysilicium, da auf eine ausbeuteverringernde Zerkleinerung von granularem Polysilicium zu Impfpartikeln verzichtet werden kann. Überdies kann auf die wesentlich aufwendigere, weniger produktive Zerkleinerung von granularem Polysilicium zu Impfpartikeln durch eine Strahlmühle (wie z.B. beschrieben in Patent US 5346141) verzichtet werden.

Das Brechgut mit einer Kantenlänge im Bereich des als Produkt für Kristallisationsverfahren erwünschten halbleiter- und solartauglichen Siliciumfeinbruchs hat vorzugsweise eine Kantenlänge von 0,1 bis 45mm, besonders bevorzugt von 2 bis 10mm. Das Brechgut hat vorzugsweise eine metallische Gesamtkontamination < 30 ppbw (ppbw = parts per billion in weight).

Besonders bevorzugt weist das Brechgut folgende Maximalwerte für die genannten Metalle auf (Angaben in ppbw):
Fe < 20
Cu < 2
Ni < 2
Cr < 2
Zn < 4
Na < 12

Der Siliciumbruch, der auf den Brecher aufgegeben wird, hat bei Einsatz eines Backenbrechers vorzugsweise eine maximale Teilchengröße von 120 mm. Bei Einsatz eines Walzenbrechers hat der Siliciumbruch vorzugsweise eine maximale Teilchengröße von 60 mm und eine metallische Gesamtkontamination < 10 ppba.

Auch ein nach 4 Durchläufen verbleibendes Brechgut einer Kantenlänge größer 45 mm erfüllt die Reinheitsanforderungen an solartaugliches Silicium und kann daher als eigenes halbleiter- und solartaugliches Produkt separiert werden.

Es ist ein Vorteil des erfindungsgemäßen Verfahrens, dass die abgesiebte Zielgröße (Siliciumteilchen einer Kantenlänge kleiner 45 mm und größer als 0,1 mm) ohne jegliche weitere Behandlung (z.B. Reinigung über Magnetabscheidung oder nasschemische Reinigung) als Produkt verpackt werden kann.

Das erfindungsgemäße Verfahren ermöglicht eine extrem hohe Produktivität bei der Erzeugung von solartauglichem Siliciumfeinbruch. Es vermeidet eine hohe Oberflächenkontamination des Siliciumfeinbruchs, welche mit kleineren und anders dimensionierten Brechern aus denselben Werkstoffen, durch andere mechanische Belastung und damit höherem Abrieb auftritt.

Das folgende Beispiel dient der weiteren Erläuterung der Erfindung.

### Beispiel 1: Glattwalzenbrecher

Es wurden 100 kg kontaminationsfrei gebrochenes, stückiges Silicium mit einer Teilchengröße von 30 mm bis maximal 50 mm mittels eines Glattwalzenbrechers, dessen Walze aus über 85% W in Cobalt-Matrix bestand, gebrochen. Das handgebrochene, stückige Silicium hatte folgende Ausgangskontamination: Fe: 0,57 ppbw, W: 0,51 ppbw, Co: 0,050 ppbw (ppbw: parts per billion in weight). Die Anteile des Brechgutes mit einer maximalen Teilchengröße 2 mm wurden mittels eines Nylonsiebs abgesiebt. Teilchen mit einer maximalen Teilchengröße > 2 mm wurden nochmals auf den Brecher gegeben. Die verwendeten Parameter des Walzenbrechers sind in Tab. 1 zusammengefasst.

**Tab. 1**

| | | 1. Durchlauf | 2. Durchlauf | 3. Durchlauf |
|---|---|---|---|---|
| Spaltweite | mm | 25 | 10 | 4 |
| Walzendurchmesser | mm | 800 | 800 | 800 |
| max. Abmessung des Aufgabegutes | mm | 45 | 27 | 12 |
| Einzugswinkel α | ° | 24,981 | 23,275 | 16,099 |
| Zerkleinerungsverhältnis | | 1,8 | 2,7 | 3 |

Die Kontamination des Brechgutes wird in Tab. 2 in ppbw genannt.

**Tab. 2**

| | 1. Durchlauf | 2. Durchlauf | 3. Durchlauf | Rest<2mm |
|---|---|---|---|---|
| Fe: | 0,93 | 1,32 | 2,84 | 10,51 |
| W: | 1,26 | 2,32 | 5,53 | 45,35 |
| Co: | 0,11 | 0,21 | 0,53 | 4,87 |

85 % des Brechgutes nach dem 3. Durchlauf hat eine maximale Teilchengröße von 1 mm bis 5 mm.
10 % des Brechgutes nach dem 3. Durchlauf hat eine maximale Teilchengröße von > 4mm und < 12 mm.
5 % des Brechgutes fallen als Staub, mit einer maximalen Teilchengröße < 2 mm an.

Jede Fraktion ist solartauglich.

### Beispiel 2: Herstellung von Impfpartikeln, geeignet zur Abscheidung von polykristallinem Silicium in einem Wirbelschichtverfahren, durch das erfindungsgemäße Verfahren.

Es wurden 20 kg durch eine Wirbelschichtabscheidung erhaltenes, granulares Polysilicium mit einer Teilchengröße 1 mm mittels des in Beispiel 1 beschriebenen Glattwalzenbrechers gebrochen. Das granulare Polysilicium hatte folgende Ausgangskontamination: Fe: 5,54 ppbw, W: < 0,01 ppbw (unter der Nachweisgrenze), Co: < 0,01 ppbw (unter der Nachweisgrenze). Die Anteile des Brechgutes mit einer maximalen Teilchengröße 0,4 mm wurden mittels eines Nylonsiebs abgesiebt. Da nach dem ersten Brechdurchlauf bereits keine Teilchen mit > 0,4 mm mehr abgesiebt wurden, erübrigte sich ein zweiter Brechdurchlauf. Die verwendeten Parameter des Walzenbrechers sind in Tab. 3 zusammengefasst.

**Tab. 3**

| | | 1. Durchlauf |
|---|---|---|
| Spaltweite | mm | 0,4 |
| Walzendurchmesser | mm | 300 |
| max. Abmessung des Aufgabegutes | mm | 1 |
| Einzugswinkel α | ° | 7,237 |
| Zerkleinerungsverhältnis | | 2,5 |

Die Kontamination des Brechgutes wird in Tab. 4 in ppbw genannt.

**Tab. 4**

| | 1. Durchlauf |
|---|---|
| Fe: | 6,21 |
| W: | 3,41 |
| Co: | 0,30 |

100 % des Brechgutes hatten bereits nach dem 1. Durchlauf die Zielgröße ≤ 0,4 mm. Es war nur eine sehr geringe Kontamination durch das Brechverfahren nachweisbar.
Das Brechgut ließ sich in einem Wirbelschichtreaktor (beschrieben im Patent DE 19948395 A1) ohne Probleme fördern, fluidisieren und erhitzen. In dem Wirbelschicht-Abscheideprozess konnte man auf diesen Impfpartikeln halbleiter- und solartaugliches granulares Polysilicium in der nahezu gleichen Qualität, wie das im Versuch zum Brechen verwandte granulare Polysilicium, abscheiden: Fe: 3,8 ppbw, W: 0,18 ppbw, Co: < 0,01 ppbw (unter der Nachweisgrenze).

### Beispiel 3: Backenbrecher

Es wurden 100 kg handgebrochenes, stückiges Silicium mit einer Teilchengröße von 65 mm bis max 120 mm mittels eines Backenbrechers, dessen Brechbacken aus über 80% W in Co-Matrix bestand, gebrochen. Das handgebrochene, stückige Silicium hatte folgende Ausgangskontamination: Fe: 0,45 ppbw, W: 0,37 ppbw, Co: 0,034 ppbw (ppbw: parts per billion in weight).

**Tabelle 5**

| | | 1. Durchlauf | 2. Durchlauf |
|---|---|---|---|
| Backenlänge | mm | 400 | 400 |
| Öffnungswinkel α | ° | 10 | 10 |
| Maulweite | mm | 125 | 85 |
| Spaltweite | mm | 55,3 | 15,3 |
| Hub am Spalt | mm | 8 | 8 |
| max. Abmessung des Aufgabegutes | mm | 120 | 65 |
| max. Abmessung des Zielproduktes | mm | 63 | 23 |
| Zerkleinerungsverhältnis ε | | 1,90 | 2,83 |

Bereits nach dem zweiten Durchlauf wiesen 100% des Materials eine maximale Kantenlänge <= 23 mm auf.
Die Kontamination des Brechgutes wird in Tab. 6 in ppbw genannt.

**Tab. 6**

| | 1. Durchlauf | 2. Durchlauf |
|---|---|---|
| Fe: | 1,37 | 3,23 |
| W: | 1,83 | 4,02 |
| Co: | 0,28 | 0,93 |

## Patentansprüche

1. Automatisches Verfahren zur Erzeugung von Siliciumfeinbruch, der direkt als Rohstoff für Halbleiteranwendungen oder für die Photovoltaik eingesetzt werden kann, aus halbleitertauglichem Siliciumbruch oder solartauglichem Siliciumbruch, wobei halbleitertauglicher Siliciumbruch oder solartauglicher Siliciumbruch auf einen Brecher mit einem Zerkleinerungsverhältnis ε von 1,5 bis 3 umfassend mehrere Brechwerkzeuge mit einer Oberfläche aus Hartmetall, bevorzugt Wolframcarbid in einer Kobaltmatrix, besonders bevorzugt mit einem Anteil an Wolframcarbid größer 80 Gew.-%, gegeben wird und ein Brechgut erzeugt wird, welches in Fraktionen klassiert wird, wobei ein Teil des Brechgutes mit einer Kantenlänge, die kleiner oder gleich ist der maximalen Kantenlänge des erwünschten Siliciumfeinbruchs (Fraktion 1) in einem Auffangbehälter 1 gesammelt wird und der Teil des Brechgutes mit einer Kantenlänge, die größer ist als die Kantenlänge des erwünschten Siliciumfeinbruchs (Fraktion 2) ebenfalls gesammelt wird.

2. Verfahren gemäß Anspruch 1, **dadurch gekennzeichnet, dass** als Brecher ein Backenbrecher eingesetzt wird, dessen Brechwerkzeuge in einem Brechwinkel α zueinander angeordnet sind, wobei der Brechwinkel α kleiner 14°, bevorzugt 10° bis 12°, ist.

3. Verfahren gemäß Anspruch 1, **dadurch gekennzeichnet, dass** als Brecher ein Walzenbrecher eingesetzt wird, dessen Brechwerkzeuge in einem Brechwinkel α zueinander angeordnet sind, wobei der Brechwinkel α kleiner 25°, bevorzugt kleiner 20°, ist.

4. Verfahren gemäß Anspruch 1, **dadurch gekennzeichnet, dass** als Brecher ein Glattwalzenbrecher oder einen Profilwalzenbrecher (z.B. Stachel- oder Riffel-walzenbrecher) eingesetzt wird.

5. Verfahren gemäß Anspruch 1, **dadurch gekennzeichnet, dass** als Brecher ein Kegelbrecher eingesetzt wird, dessen Brechwerkzeuge in einem Brechwinkel α zueinander angeordnet sind, wobei der Brechwinkel α kleiner 12°, bevorzugt 10° bis 12°, ist.

6. Verfahren gemäß einem der Ansprüche 1 bis 5, **dadurch gekennzeichnet, dass** das Brechgut in 2 Fraktionen klassiert wird und das Klassieren mittels eines Siebes erfolgt.

7. Verfahren gemäß einem der Ansprüche 1 bis 6, wobei aus Fraktion 1 ein Teil des Feinbruchs, der eine Kantenlänge, die kleiner ist als die minimale Länge des erwünschten Siliciumfeinbruchs, aussortiert und gesammelt wird (Fraktion 3).

8. Verfahren gemäß Anspruch 7, **dadurch gekennzeichnet, dass** das Aussortieren in eine Fraktion 3 mittels eines Siebes erfolgt.

9. Verfahren gemäß einem der Ansprüche von 1 bis 8, **dadurch gekennzeichnet, dass** der Teil des Brechgutes mit einer Kantenlänge, die größer ist als die Kantenlänge des erwünschten Siliciumfeinbruchs, nochmals auf einen Brecher wie in einem der Ansprüche 1 bis 5 genutzt, aufgegeben, zerkleinert, analog klassiert und gesammelt wird.

10. Verfahren gemäß Anspruch 9, **dadurch gekennzeichnet, dass** der Teil des Brechgutes mit einer Kantenlänge, die größer ist als die Kantenlänge des erwünschten Siliciumfeinbruchs, abermals auf einen Brecher wie in einem der Ansprüche 1 bis 5 genutzt aufgegeben, zerkleinert, analog klassiert und gesammelt wird.

11. Verfahren gemäß einem der Ansprüche 1 bis 10, **dadurch gekennzeichnet, dass** maximal vier Brecherdurchläufe durchgeführt werden.

12. Verfahren gemäß einem der Ansprüche 9 bis 11, **dadurch gekennzeichnet, dass** die nach jedem Brecherdurchlauf erhaltenen Fraktionen 1 bzw. 3 jeweils vereint und direkt verpackt werden.

## Claims

1. Automatic method for producing fine silicon fragments which can be used directly as raw material for semiconductor applications or for photovoltaics from silicon fragments that are suitable for semiconductor applications or silicon fragments that are suitable for solar applications, silicon fragments that are suitable for semiconductor applications or silicon fragments that are suitable for solar applications being passed to a crusher having a comminution ratio ε of from 1.5 to 3 comprising a plurality of crushing tools having a surface of hard metal, preferably tungsten carbide in a cobalt matrix, particularly preferably with a tungsten carbide content of greater than 80% by weight, and a crushed material being produced which is classified into fractions, part of the crushed material with an edge length which is less than or equal to the maximum edge length of the desired fine silicon fragments (fraction 1) being collected in a collection container 1, and the part of the crushed material with an edge length greater than the edge length of the desired fine silicon fragments (fraction 2) likewise being collected.

2. Method according to Claim 1, **characterized in that** the crusher used is a jaw crusher, the crushing tools of which are arranged at a crushing angle α with respect to one another, the crushing angle α being less than 14°, preferably 10° to 12°.

3. Method according to Claim 1, **characterized in that** the crusher used is a roll crusher, the crushing tools of which are arranged at a crushing angle α with respect to one another, the crushing angle α being less than 25°, preferably less than 20°.

4. Method according to Claim 1, **characterized in that** the crusher used is a smooth roll crusher or a profiled roll crusher (e.g. toothed roll crusher or grooved roll crusher).

5. Method according to Claim 1, **characterized in that** the crusher used is a cone crusher, the crushing tools of which are arranged at a crushing angle α with respect to one another, the crushing angle α being less than 12°, preferably 10° to 12°.

6. Method according to one of Claims 1 to 5,
**characterized in that** the crushed material is classified into two fractions and the classification is carried out by means of a screen.

7. Method according to one of Claims 1 to 6, in which part of the fine fragments which has an edge length less than the minimum length of the desired fine silicon fragments is sorted out of fraction 1 and collected (fraction 3).

8. Method according to Claim 7, **characterized in that** the sorting into a fraction 3 is carried out by means of a screen.

9. Method according to one of Claims 1 to 8,
**characterized in that** the part of the crushed material with an edge length greater than the edge length of the desired fine silicon fragments is fed back to a crusher as used in one of Claims 1 to 5, and is then comminuted, classified in a similar way and collected.

10. Method according to Claim 9, **characterized in that** the part of the crushed material with an edge length greater than the edge length of the desired fine silicon fragments is once again fed to a crusher as used in one of Claims 1 to 5, and is then comminuted, classified in a similar way and collected.

11. Method according to one of Claims 1 to 10,
**characterized in that** at most four passes through the crusher are carried out.

12. Method according to one of Claims 9 to 11,
**characterized in that** the fractions 1 and 3 obtained after each passage through the crusher are in each case combined and packaged directly.

## Revendications

1. Procédé automatique de formation de concassés de silicium qui peuvent être utilisés directement comme matière première pour des applications en semi-conducteurs ou des applications solaires à partir de débris de silicium pour semi-conducteurs ou de débris de silicium pour applications solaires, dans lequel les débris de silicium pour semi-conducteurs ou les débris de silicium pour applications solaires sont délivrés à un concasseur dont le rapport ε de diminution est compris entre 1,5 et 3 et qui comprend plusieurs outils de concassage dont la surface est en métal dur, de préférence en carbure de tungstène dans une matrice de cobalt, et dont la teneur en carbure de tungstène de façon particulièrement préférable est supérieure à 80 % en poids, pour former un produit concassé trié en fractions, une partie du produit concassé dont la longueur des arêtes est inférieure ou égale à la longueur maximale des arêtes du concassé fin de silicium souhaité (fraction 1) étant rassemblée dans un récipient de reprise 1, la partie du produit concassé dont la longueur des arêtes est supérieure à la longueur des arêtes du concassé fin de silicium souhaité (fraction 2) étant également rassemblée.

2. Procédé selon la revendication 1, **caractérisé en ce que** comme concasseur, on utilise un concasseur à mâchoires dont les outils de concassage sont disposés l'un par rapport à l'autre à un angle de concassage α, l'angle de concassage α étant inférieur à 14° et étant de préférence compris entre 10° et 12°.

3. Procédé selon la revendication 1, **caractérisé en ce que** comme concasseur, on utilise un concasseur à cylindres dont les outils de concassage sont disposés l'un par rapport à l'autre à un angle de concassage α, l'angle de concassage α étant inférieur à 25° et de préférence inférieur à 20°.

4. Procédé selon la revendication 1, **caractérisé en ce que** comme concasseur, on utilise un concasseur à cylindres lisses ou un concasseur à cylindres profilés (par exemple un concasseur à cylindres à picots ou cannelés).

5. Procédé selon la revendication 1, **caractérisé en ce que** comme concasseur, on utilise un concasseur conique dont les outils de concassage sont disposés l'un par rapport à l'autre à un angle de concassage α, l'angle de concassage α étant inférieur à 12° et de préférence compris entre 10° et 12°.

6. Procédé selon l'une des revendications 1 à 5, **caractérisé en ce que** le produit concassé est trié en deux fractions et **en ce que** le tri s'effectue au moyen d'un tamis.

7. Procédé selon l'une des revendications 1 à 6, dans lequel on sépare de la fraction 1 une partie du concassé fin dont la longueur des arêtes est inférieure à la longueur minimale du concassé fin de silicium souhaité et on la rassemble (fraction 3).

8. Procédé selon la revendication 7, **caractérisé en ce que** le tri en une fraction 3 s'effectue au moyen d'un tamis.

9. Procédé selon l'une des revendications 1 à 8,
**caractérisé en ce que** la partie du produit concassé dont la longueur des arêtes est supérieure à la longueur des arêtes du concassé fin de silicium souhaité est encore amenée à un concasseur similaire à celui d'une des revendications 1 à 5, est concassée, triée de manière similaire et rassemblée.

10. Procédé selon la revendication 9, **caractérisé en ce que** la partie du produit concassé dont la longueur des arêtes est supérieure à la longueur des arêtes du concassé fin de silicium souhaité est de nouveau amenée dans un concasseur du type de celui utilisé dans l'une des revendications 1 à 5, est concassée, triée de manière similaire et rassemblée.

11. Procédé selon l'une des revendications 1 à 10, **caractérisé en ce que** l'on réalise au maximum quatre passes de concassage.

12. Procédé selon l'une des revendications 9 à 11, **caractérisé en ce que** les fractions 1 à 3 obtenues après chaque passe de concassage sont réunies et emballées directement.
